# EUROPEAN PATENT SPECIFICATION

(11) **EP 3 390 910 B1**
(45) Date of publication and mention of the grant of the patent: **27.11.2019**
(21) Application number: 16822392.3
(22) Date of filing: 14.12.2016
(51) Int. Cl.: F23L 15/02, F23G 7/06, F27B 17/00

(54) **PLANT AND METHOD FOR REGENERATIVE COMBUSTION WITH LOW-CALORIFIC-VALUE FUELS**
ANLAGE UND VERFAHREN ZUR REGENERATIVEN VERBRENNUNG MIT NIEDERKALORISCHEN BRENNSTOFFEN
INSTALLATION ET PROCÉDÉ DE COMBUSTION À RÉGÉNÉRATION À COMBUSTIBLES À FAIBLE POUVOIR CALORIFIQUE

(30) Priority: 15.12.2015 IT UB20159183
(43) Date of publication of application: 24.10.2018
(73) Proprietor: Tenova S.p.A., 20149 Milano (IT)
(72) Inventor: DELLA ROCCA, Alessandro, 66054 Vasto (CH) (IT); FANTUZZI, Massimiliano, 16149 Genova (IT)
(74) Representative: Martegani, Franco
(86) International application number: PCT/EP2016/080920
(87) International publication number: WO 2017/102805

(56) References cited:
- EP-A1- 0 599 548
- EP-A2- 0 322 678
- FR-A- 894 658
- US-A- 4 358 268
- US-A- 5 823 124

## Description

The present invention relates to a plant and method for regenerative combustion with low-calorific-value fuels.

In the steel industry, for example in industrial heating furnaces, high-temperature processes take place, which require high-calorific-value fuels for reaching the process temperature, wherein, for example, these temperatures indicatively reach temperatures of up to 1150°C - 1320°C in the furnaces.

It should be pointed out, however, that costly energy resources - such as noble chemical sources like natural gas - are specifically used in these apparatuses for facilitating variations in the production quantities.

It is also known that these large apparatuses consume significant quantities of thermal energy for their functioning. For this reason, attempts are being made in the steel industry to substitute noble energy sources, such as natural gases, with gases produced as by-products generated with other production apparatuses, such as, for example, blast furnaces or coke ovens. This tendency has the benefit of reducing the emission levels of CO₂ on the part of the whole industrial plant. This is the case, as normally the process gases generated as by-products by modern and efficient equipment, generally have increasingly lower calorific powers. This means that these by-products cannot be easily used as fuels in process equipment operating at high temperatures. These by-products are consequently used with a low efficiency for the generation of electric energy or flare burnt before being released into the atmosphere.

The process equipment is consequently fed with nobler fuels, thus increasing the massive emissions of CO₂ on the part of the whole plant, in addition to increasing the production costs. A more efficient use of by-products within the production plant, therefore, allows considerable benefits for the environment and for the profitability of industrial production, to be obtained.

All of these issues have resulted in a tendency, particularly in the steel production field, to promote the use of regenerative combustion plants and methods using fuels having a low calorific value. For the development of these plants and methods, for example, the use of regenerative burners has been envisaged, capable of recovering energy which would otherwise be lost and allowing these fuels having a low calorific value, to be used.

Current plants and methods, however, do not allow a complete exploitation of these fuels, nonetheless discharging fumes towards the outside which could release further heat that could be adopted for implementing an even greater saving through a plant and various methods of use of the combustion system of the plant.

FR 894658A describes a regenerative combustion plant with low-calorific-value fuels, according to the preamble of claim 1.

US 5823124 relates to a method and a system with reduced emissions of fuel and NOₓ from a furnace.

The general objective of the present invention is to provide a plant and method for regenerative combustion with low-calorific-value fuels, capable of solving the drawbacks of the known art indicated above, in an extremely simple, economical and particularly functional manner.

A further objective of the present invention is to implement a plant and method for regenerative combustion with low-calorific-value fuels, which is technically simple to run and with extremely reduced and limited costs.

Another objective of the present invention is to implement a plant capable of drastically reducing possible emissions of carbon monoxide deriving from a combustion system developed with the regeneration of low-calorific-value fuel such as, for example, blast furnace gas.

The structural and functional characteristics of the present invention and its advantages with respect to the known art will appear even more evident from the following description, referring to the enclosed schematic drawings, which show an embodiment example of the invention. In the drawings:

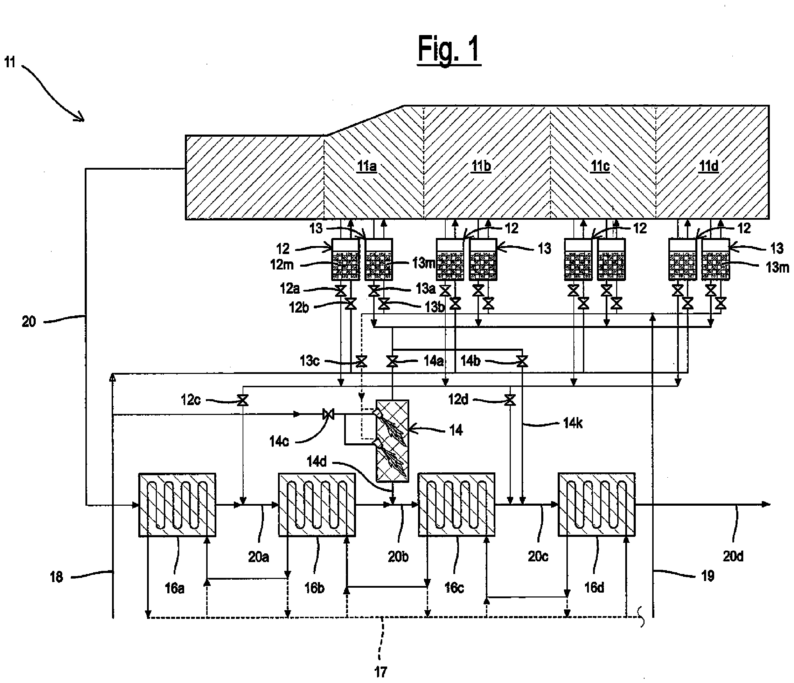

- figure 1 is a scheme showing a plant configuration whereby a regenerative combustion method is effected, with low-calorific-value fuels, according to the present invention;

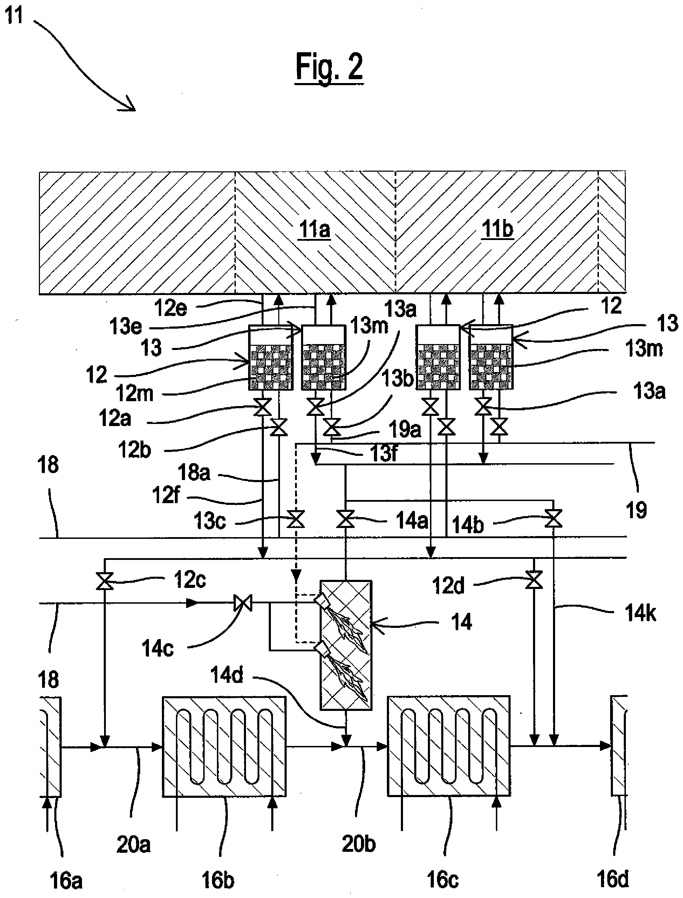

- figure 2 shows an enlarged view of a part of the plant of figure 1.

With reference to the figures, these illustrate a plant capable of implementing a regenerative combustion method with low-calorific-value fuels, both plant and method according to the present invention.

The plant of the invention can be called a double regenerative combustion system and is associated with a furnace or combustion chamber 11 for high temperature thermal processes, around 1200 - 1300°C, equipped with regeneration units for both reagents, i.e. fuel and comburent.

In addition to the usual known feeding lines of the furnace or combustion chamber 11, for its correct functioning, an air feeding line 18 is also connected together with a feeding line of low-calorific-value (poor) fuel 19 as described hereunder, for the treatment of the outgoing fumes from the same furnace. A non-regenerated 20 fume discharging line is also provided at the outlet of the furnace 11, operatively connected to one or more heat exchangers 16a, 16b, 16c, 16d, etc. which form a cascade heat recovery system, each operating within a different temperature range.

In the example shown and described, as reagents used in the plant for implementing the method, air coming from the air feeding line 18 can be used on the one hand, and on the other, poor fuel gases coming from the feeding line of poor fuel 19, which are treated in pre-heating in at least one air regeneration unit 12 and in at least one fuel regeneration unit 13, respectively, for their pre-heating. In the example described and illustrated, as can be seen, further air regeneration units 12 and fuel regeneration units 13 are provided, positioned in correspondence with consecutive control areas, 11a, 11b, 11c, 11d, etc.. of the chamber or furnace 11 for effecting the pre-heating.

Each of these regeneration units 12, 13, in a plant of the invention, is positioned on a respective duct for exhaust fumes to be regenerated 12e, 13e at the outlet of the furnace 11 and, according to the method of the invention, is operated periodically and selectively in two subsequent steps or different modes. The regeneration units 12 and 13 are in fact operated in a first regeneration mode, taking fumes of hot combusted products by means of the ducts 12e and 13e, from at least one control area 11a of the chamber 11. In order to effect this phase of the method of the invention, the plant provides fume regeneration valves 12a and 13a positioned on outlet ducts from regeneration means 12m, 13m, positioned inside the regeneration units 12 and 13, valves 12a and 13a being positioned on the ducts 12f and 13f downstream of the regeneration units 12 and 13 and which are both open.

In the same regeneration state, the method provides that air 12b and fuel 13b regeneration valves respectively - positioned on a respective air feeding duct 18a and poor fuel feeding duct 19a, at the inlet of the regeneration means 12m and 13m, but downstream of the regeneration units 12 and 13 - are respectively both closed in the plant.

When, on the contrary, the phase of the method is effected, in which the regeneration units 12 and 13 are operated in combustion mode, the air and fuel reagents are pre-heated by passing them through the hot regeneration means 12m and 13m inside the regeneration units 12 and 13. To do this, the fume regeneration valves 12a and 13a are both closed and the air regeneration valves 12b and fuel regeneration valves 13b are both open.

During the above-mentioned regeneration mode, the regeneration means 12m and 13m inside the regeneration units 12 and 13 were previously heated at a slightly lower temperature (for example 1200°) with respect to the temperature of the fumes leaving the control area 11a of the chamber 11 (for example 1250°).

The fumes leave the regeneration units 12 and 13 passing through the fume regeneration valves 12a and 12b at a much lower temperature (for example about 200°C) with respect to the process temperature inside the control area 11a of the chamber 11.

This temperature is suitably limited from being too low to avoid the condensation of acid substances which would limit the life of the above-mentioned valves.

During the combustion mode, the regeneration means 12m and 13m, previously pre-heated in the previous regeneration mode, exchange their internal energy with the respective reagent (air and fuel) which is passed through said regeneration means 12m and 13m before reentering the specific control area of the furnace 11 and combusted.

It should be noted that during the regeneration mode, the fumes leaving the air regeneration units 12, have the same composition as the fumes inside the chamber 11, with a slight increase in the concentration of the chemical species inside the combustion air. The fumes leaving the fuel regeneration unit 13 are otherwise mixed with a small quantity of fuel which remains inside dead volume areas of the regeneration unit 13 and fuel regeneration valve 13b during the time necessary for commuting from the combustion state to the regeneration state. This means that the fumes or exhaust gases exiting through the fume regeneration valve 13a contain a certain quantity of fuel in relation to both the commuting time between the regeneration mode and combustion mode and the volume of dead areas in which said fuel can be concealed. As this quantity of fuel is not used, it represents a loss of energy from the system, and also a risk for the safety and for the environment in which should be introduced.

This quantity of fuel may tend to be zero when the project parameters, such as, for example, the commutation time and volume of the dead areas are sufficiently small. These parameters, however, also depend on the size of the burner which is generally the result of considerations of a technical and economic nature.

In order to limit the above-mentioned risk as much as possible, a post-combustion unit 14 is provided and operated according to the method and plant of the present invention, positioned on the route of regenerated fumes leaving the fuel regeneration units 13 discussed above.

It can therefore be seen that, according to the invention, said post-combustion unit 14 is fed first of all with all or at least a part of the regenerated fumes coming from the fume regeneration valve 13a, positioned on the duct 13f at the outlet of the fuel regeneration unit 13. Secondly, the post-combustion unit 14 is fed with a quantity of air coming from a valve 14c, situated on the air feeding line 18 and positioned at the inlet of the post-combustion unit 14. A flow of a certain quantity of fuel fed from a valve 13c of the feeding line of poor fuel 19, may also be necessary for completing the oxidation of the regenerated fumes coming from the fume regeneration valve 13a inside the post-combustion unit 14.

The provision of a post-combustion unit 14, according to the invention, is such as to eliminate the part of fuel contained in the regenerated fumes leaving the fuel regeneration unit 13 due to the continuous passage between the regeneration and combustion mode.

The fumes thus oxidized leaving the post-combustion unit 14 through an outlet pipe 14d, have a temperature higher than the temperature at the inlet, when they passed through a fume valve 14a thanks to the exothermic oxidation process inside the post-combustion unit 14.

The enthalpy in the fumes treated at the exit of the outlet pipe 14d, resulting from the oxidation process inside the post-combustion unit 14, can be recovered by means of a heat exchanger 16c connected to the same and being part of the heat recovery group mentioned above. It should be remembered that the non-regenerated fraction of fumes sent to the discharge line of non-regenerated fumes 20 is at times necessary for controlling the pressure in the combustion chamber 11. This fraction of fumes is normally at a high temperature and its enthalpy can be recovered only through the above-mentioned heat exchangers made of special materials. It should also be noted that the flow-rate associated with the flow of fumes in the discharge line of non-regenerated fumes 20 at the outlet of the furnace 11, is normally a small fraction of the flow-rate of the regenerated fumes processed through the regeneration units 12 and 13 and therefore a small quantity of enthalpy is associated with the same.

Consequently, by mixing the flow-rate at the outlet of the non-regenerated fume discharge line 20 with the flow-rate of the oxidized fumes in the outlet pipe 14d of the post-combustion unit 14, a greater flow-rate will be obtained in a pipe 20b at medium temperatures. As its temperature is intermediate between the temperature present in the flows of fumes in the pipes 14d and 20, a standard heat exchanger can be used as heat exchanger 16c.

Said heat exchanger 16c is connected at the other side to a generic heat recovery system or an ORC (Organic Rankine Cycle) system or to a co-generation system, schematized in 17, with further heat recovery.

As it may be possible to process only a portion of regenerated fumes coming from the fuel regeneration unit 13 through the fume valve 14a towards the post-combustion unit 14, a remaining portion of these fumes can be sent, through a valve 14b positioned on a pipe 14k, to be possibly mixed downstream of the heat exchanger 16c with cooled exhaust fumes of said heat exchanger 16c having a similar temperature. This ensures a limited or no reduction in efficiency for the heat recovery process.

This flow of non-oxidized exhaust fumes can be possibly mixed with a flow of fumes representing a part or all of the regenerated fumes passing through the valve 12a at the outlet of the air-regeneration unit of 12. This flow of fumes passing through a valve 12d is normally at the same temperature as the fumes regenerated by the fuel-regeneration units 13. Furthermore, if the dead volume mentioned above, containing a few fractions of fuel, is sufficiently small as to mix the flow of non-oxidized fumes not passing through the valve 14a and which reach the valve 14b with the flow of fumes or exhaust gases passing through the valve 12d, a means is provided for reducing concentrations of fuel species to such an extent that they do not represent any risk for safety or for the environment.

The flow of fumes or exhaust gases reaching a pipe 20c downstream of the heat exchanger 16c, possibly obtained by mixing the fumes introduced and processed by the heat exchanger 16c with the flow of fumes or non-oxidized exhaust gases coming from the valve 14b and from the valve 12d, can be further processed in a second heat exchanger 16d positioned downstream of the first heat exchanger 16c.

This last exchanger 16d can also be connected to the same or another recovery system 17 as previously indicated for the heat exchanger 16c.

Finally, the flow of treated fumes leaving the exchanger 16d through a pipe 20d is then sent to a chimney or to a fume post-treatment plant.

Other heat exchanger units 16a and 16b can be installed upstream of the outlet of the outlet pipe 14d from the post-combustion unit 14.

In particular, a first heat exchanger 16a is required if the recovery of the heat of the non-regenerated exhaust gases coming from line 20 is effectively feasible from a technical and economic point of view. It is connected to the same or another heat-recovery system such as the above-mentioned heat exchangers 16c and 16d. A second heat exchanger 16b can be installed if the flow of fumes or exhaust gases reaching a valve 12c, which represents a part or all of the exhaust gases regenerated by the air-regeneration units 12, is at a higher temperature than that of the oxidized fumes leaving the pipe 14d from the post-combustion units 14.

Alternatively, the heat exchanger 16b can be installed in place of the heat exchanger 16a when the flow of non-regenerated exhaust gases coming from line 20, is at such low temperatures that no heat recovery is technically and economically feasible. In these cases, it is possibly necessary that non-regenerated exhaust gases or fumes, coming from line 20, be mixed with the exhaust gases reaching the valve 12c from the air-regeneration units 12, in order to limit the temperature of the hot fluid in an inlet pipe 20a of the heat exchanger 16b.

The double regenerative combustion system described above can naturally comprise all or some of the various provisions or equipment described. The final solution depends on the technical and economic analysis of the specific plant conditions such as the availability of heat-recovery systems, the type of fuel, the plant dimensions, possible nearby utilities, and so forth.

It can thus be seen that with a plant and method as defined with double regenerative combustion, it is possible to use fuels with a very low calorific value in high-temperature thermal processes, with evident economic and operational benefits, in addition to a decrease in pollution.

This is obtained by pre-heating both reagents by means of regeneration units, which allow pre-heating temperatures about 100°C lower than the process temperature, to be reached. This means that the combusted gases or fumes processed by this regeneration plant connected to a chamber at 1250°C, at the outlet of the plant are at less than 200°C.

The forms of the structure for the implementation of a plant and method of the invention, as also the materials and assembly modes, can naturally differ from those shown for purely illustrative and non-limiting purposes in the drawings,.

The objective mentioned in the preamble of the description has thus been achieved.

The protection scope of the present invention is defined by the enclosed claims.

## Claims

1. A regenerative combustion plant adapted to burn low-calorific-value fuels in a furnace or combustion chamber (11) for high-temperature thermal processes at around 1200-1300°C, said plant comprising at least one air-regeneration unit (12) and at least one regeneration unit of low-calorific-value fuel (13) for preheating air and low-calorific-value fuel before entering a control area of the furnace (11), wherein each of said regeneration units (12,13) is positioned on a respective exhaust fume duct (12e,13e) at the outlet of the furnace (11) and on an air-feeding duct (18a) and a feeding duct of low-calorific-value fuel (19a) at the inlet of the furnace, wherein each regeneration unit (12,13) is periodically and selectively run in two different consecutive regeneration and combustion states, valves (12a,13a, 12b,13b) being envisaged on said ducts, downstream of said regeneration units (12,13) in an open and/or closed arrangement depending on one of the two regeneration and combustion states selected and active, **characterized in that** a post-combustion unit (14) is connected to a duct (13f), at the outlet of the fuel regeneration unit (13), which is fed by at least a part of regenerated fumes coming from a fume-regeneration valve (13a) at the outlet of said fuel-regeneration unit (13), said post-combustion unit (14) being further fed by a certain quantity of air coming from a valve (14c) positioned on an air-feeding line (18) and by a certain quantity of fuel fed by a valve (13c) of a feeding line of low-calorific-value fuel to complete the oxidation of the regenerated fumes coming from the fume-regeneration valve (13a) inside the post-combustion unit (14), said post-combustion unit (14) being connected at the outlet to at least one heat exchanger (16a, 16b, 16c, 16d), wherein said control area comprises consecutive control areas (11a, 11b, 11c, 11d, etc.), each of said control areas comprising at least one air-regeneration unit (12) and at least one regeneration unit of low-calorific-value fuel (13), wherein each of said fuel regeneration units is connected to said post-combustion unit (14).

2. The regenerative combustion plant according to claim 1, **characterized in that** a non-regenerated fume discharge line (20) is envisaged at the outlet of the furnace (11), operatively connected to said at least one heat exchanger (16a, 16b, 16c, 16d).

3. The regenerative combustion plant according to claim 1 or 2, **characterized in that** a fume valve (14a) is positioned downstream of said fuel-regeneration unit (13), which feeds said regenerated fumes towards said post-combustion unit (14).

4. The regenerative combustion plant according to claim 3, **characterized in that** a further valve (14b) is positioned downstream of said fuel regeneration unit (13), which feeds a remaining portion of said regenerated fumes through a pipe (14k) to be mixed with discharge fumes cooled downstream of said at least one heat exchanger (16a, 16b, 16c, 16d).

5. A regenerative combustion method with low-calorific-value fuels to be implemented in a plant associated with a furnace or combustion chamber (11) for high-temperature thermal processes around 1200-1300°C, wherein the plant comprises at least one air-regeneration unit (12) and at least one regeneration unit of low-calorific-value fuel (13) for pre-heating air and low-calorific-value fuel before entering a control area of the furnace (11), wherein each of said regenerative units (12,13) is positioned on a respective discharge fume duct (12e,13e) at the outlet of the furnace (11) and on an air-feeding duct (18a) and a feeding duct of low-calorific-value fuel (19a) at the inlet of the furnace, the following phases being implemented in said method:
- a first regeneration phase, wherein a flow of discharge fumes leaving the furnace (11) is passed through said at least one air-regeneration unit (12) and also in said at least one regeneration unit of low-calorific-value fuel (13) through regeneration means (12m, 13m) of both of said units (12,13) which absorb heat keeping the air- (18a) and fuel- (19a) feeding ducts to both of said units (12,13), closed;
- a second subsequent combustion phase wherein said flow of fumes is suspended in said at least one air-regeneration unit (12) and in said at least one regeneration unit of low-calorific-value fuel (13), and air and fuel are fed to said at least one air-regeneration unit (12) and to said at least one regeneration unit of low-calorific-value fuel (13) respectively, to absorb heat from said regeneration means (12m,13m) heated in the previous first phase, said first and second phases being periodically and selectively repeated to bring both of said units (12,13) to different consecutive regeneration and combustion states;
the method being **characterized in that**
- a third phase wherein a post-combustion unit (14) is fed by at least a part of regenerated fumes coming from a fume-regeneration valve (13a) at the outlet of said fuel-regeneration unit (13), by a certain quantity of air coming from a valve (14c) positioned on said air-feeding line (18) and by a certain quantity of fuel fed by a valve (13c) of the combustion line of low-calorific-value fuel (19) to complete the oxidation of the regenerated fumes coming from the fume-regeneration valve (13a), feeding oxidized fumes leaving said post-combustion unit (14) to at least one heat exchanger (16c),
the method being implemented in a plant wherein said control line comprises consecutive control areas (11a, 11b, 11c, 11d, etc.), each of said control areas comprising at least one air-regeneration unit (12) and at least one regeneration unit of low-calorific-value fuel (13), wherein each of said fuel regeneration units is connected to said post-combustion unit (14).

6. The regenerative combustion method according to claim 5, **characterized in that** it feeds non-regenerated fumes leaving the furnace (11) to a non-regenerated fume discharge line (20) operatively connected to said at least one heat exchanger (16a, 16b, 16c, 16d).

7. The regenerative combustion method according to claim 5 or 6, **characterized in that** it feeds a remaining portion of regenerated fumes leaving said fuel-regeneration unit (13) to be mixed with discharge fumes cooled downstream of said at least one heat exchanger (16a, 16b, 16c, 16d).

8. The regenerative combustion method according to one or more of the previous claims from 5 to 7, **characterized in that** it subdivides said furnace or combustion chamber (11) into consecutive control areas (11a, 11b, 11c, 11d) and has air-regeneration units (12) and fuel-regeneration units (13) in correspondence with said control areas (11a, 11b, 11c, 11d) for effecting the pre-heating.

## Patentansprüche

1. Regenerative Verbrennungsanlage, die derart angepasst ist, Brennstoffe mit geringem Brennwert in einem Ofen oder einer Brennkammer (11) für thermische Prozesse bei hoher Temperatur bei etwa 1200 bis 1300°C zu verbrennen, wobei die Anlage zumindest eine Luftregenerationseinheit (12) und zumindest eine Regenerationseinheit für Brennstoff (13) mit geringem Brennwert zum Vorheizen von Luft und Brennstoff mit geringem Brennwert vor Eintritt in einen Steuerbereich des Ofens (11) umfasst, wobei jede der Regenerationseinheiten (12, 13) an einem jeweiligen Abgasrauchkanal (12e, 13e) an dem Auslass des Ofens (11) und an einem Luftzufuhrkanal (18a) und einem Zufuhrkanal von Brennstoff (19a) mit geringem Brennwert an dem Einlass des Ofens positioniert sind, wobei jede Regenerationseinheit (12, 13) periodisch und selektiv in zwei verschiedenen aufeinanderfolgenden Regenerations- und Verbrennungszuständen betrieben wird, wobei Ventile (12a, 13a, 12b, 13b) an den Kanälen stromabwärts der Regenerationseinheiten (12, 13) in einer Offen- und/oder Geschlossen-Anordnung abhängig von einem der beiden Regenerations- und Verbrennungszustände, die gewählt und aktiv sind, vorgesehen sind, **dadurch gekennzeichnet, dass** eine Nachverbrennungseinheit (14) mit einem Kanal (13f) an dem Auslass der Brennstoffregenerationseinheit (13) verbunden ist, die durch zumindest einen Teil von regenerierten Rauchgasen gespeist wird, die von einem Rauchgasregenerationsventil (13a) an dem Auslass der Brennstoffregenerationseinheit (13) stammen, wobei die Nachverbrennungseinheit (14) ferner durch eine gewisse Menge an Luft, die von einem Ventil (14c) stammt, das an einer Luftzufuhrleitung (18) positioniert ist, und durch eine gewisse Menge an Brennstoff gespeist wird, die durch ein Ventil (13c) einer Zufuhrleitung von Brennstoff mit geringem Brennwert gespeist wird, um die Oxidation der regenerierten Rauchgase, die von dem Rauchgasregenerationsventil (13a) innerhalb der Nachverbrennungseinheit (14) stammen, zu vervollständigen, wobei die Nachverbrennungseinheit (14) an dem Auslass mit zumindest einem Wärmetauscher (16a, 16b, 16c, 16d) verbunden ist, wobei der Steuerbereich aufeinanderfolgende Steuerbereiche (11a, 11b, 11c, 11d, etc.) umfasst, wobei jeder der Steuerbereiche zumindest eine Luftregenerationseinheit (12) und zumindest eine Regenerationseinheit für Brennstoff (13) mit geringem Brennwert aufweist, wobei jede der Brennstoffregenerationseinheiten mit der Nachverbrennungseinheit (14) verbunden ist.

2. Regenerative Verbrennungsanlage nach Anspruch 1, **dadurch gekennzeichnet, dass** eine Austragsleitung (20) für nicht regeneriertes Rauchgas an dem Auslass des Ofens (11) vorgesehen ist, die funktional mit dem zumindest einen Wärmetauscher (16a, 16b, 16c, 16d) verbunden ist.

3. Regenerative Verbrennungsanlage nach einem der Ansprüche 1 oder 2, **dadurch gekennzeichnet, dass** ein Rauchgasventil (14a) stromabwärts der Brennstoffregenerationseinheit (13) positioniert ist, das die regenerierten Rauchgase zu der Nachverbrennungseinheit (14) zuführt.

4. Regenerative Verbrennungsanlage nach Anspruch 3, **dadurch gekennzeichnet, dass** ein weiteres Ventil (14b) stromabwärts der Brennstoffregenerationseinheit (13) positioniert ist, das einen verbleibenden Anteil der regenerierten Rauchgase durch ein Rohr (14k) zur Mischung mit Austragsrauchgasen zuführt, die stromabwärts des zumindest einen Wärmetauschers (16a, 16b, 16c, 16d) gekühlt sind.

5. Regeneratives Verbrennungsverfahren mit Brennstoffen mit geringem Brennwert zur Implementierung in einer Anlage, die einem Ofen oder einer Brennkammer (11) zugeordnet ist, für thermische Prozesse bei hoher Temperatur von etwa 1200 bis 1300°C, wobei die Anlage zumindest eine Luftregenerationseinheit (12) und zumindest eine Regenerationseinheit für Brennstoff (13) mit geringem Brennwert zum Vorheizen von Luft und Brennstoff mit geringem Brennwert vor Eintritt in einen Steuerbereich des Ofens (11) umfasst, wobei jede der regenerativen Einheiten (12, 13) an einem jeweiligen Austragsrauchgaskanal (12e, 13e) an dem Auslass des Ofens (11) und an einem Luftzufuhrkanal (18a) und einem Zufuhrkanal für Brennstoff (19a) mit geringem Brennwert an dem Einlass des Ofens positioniert ist, wobei die folgenden Phasen im Verfahren implementiert sind:
- eine erste Regenerationsphase, in der eine Strömung von Austragsrauchgasen, die den Ofen (11) verlassen, durch die zumindest eine Luftregenerationseinheit (12) und auch in die zumindest eine Regenerationseinheit für Brennstoff (13) mit geringem Brennwert durch ein Regenerationsmittel (12m, 13m) von beiden der Einheiten (12, 13) geleitet wird, die Wärme absorbieren, wobei die Luft-(18a)- und Brennstoff-(19a)-Zufuhrkanäle zu beiden der Einheiten (12, 13) geschlossen sind;
- eine zweite nachfolgende Verbrennungsphase, in der die Rauchgasströmung in der zumindest einen Luftregenerationseinheit (12) und in der zumindest einen Regenerationseinheit für Brennstoff (13) mit geringem Brennwert ausgesetzt wird und die Luft und der Brennstoff zu der zumindest einen Luftregenerationseinheit (12) bzw. zu der zumindest einen Regenerationseinheit für Brennstoff (13) mit geringem Brennwert zugeführt wird, um Wärme von dem Regenerationsmittel (12m, 13m) zu absorbieren, das in der vorhergehenden ersten Phase erhitzt wurde, wobei die erste und zweite Phase periodisch und selektiv wiederholt werden, um beide Einheiten (12, 13) auf verschiedene aufeinanderfolgende Regenerations- und Verbrennungszustände zu bringen;
wobei das Verfahren **gekennzeichnet ist, durch**
- eine dritte Phase, in der eine Nachverbrennungseinheit (14) **durch** zumindest einen Teil von regenerierten Rauchgasen, die von einem Rauchgasregenerationsventil (13a) an dem Auslass der Brennstoffregenerationseinheit (13) stammen, **durch** eine gewisse Menge von Luft, die von einem Ventil (14c) stammt, das an der Luftzufuhrleitung (18) positioniert ist, und **durch** eine gewisse Menge an Brennstoff gespeist wird, die **durch** ein Ventil (13c) der Verbrennungsleitung für Brennstoff (19) mit geringem Brennwert zugeführt wird, um die Oxidation der regenerierten Rauchgase zu vervollständigen, die von dem Rauchgasregenerationsventil (13a) stammen, wobei oxidierte Rauchgase, die die Nachverbrennungseinheit (14) verlassen, zu zumindest einem Wärmetauscher (16c) zugeführt werden,
wobei das Verfahren in einer Anlage implementiert ist, wobei die Steuerleitung aufeinanderfolgende Steuerbereiche (11a, 11b, 11c, 11d, etc.) umfasst, wobei jeder der Steuerbereiche zumindest eine Luftregenerationseinheit (12) und zumindest eine Regenerationseinheit für Brennstoff (13) mit geringem Brennwert umfasst, wobei jede der Brennstoffregenerationseinheiten mit der Nachverbrennungseinheit (14) verbunden ist.

6. Regeneratives Verbrennungsverfahren nach Anspruch 5, **dadurch gekennzeichnet, dass** es nicht regenerierte Rauchgase, die den Ofen (11) verlassen, zu einer Austragsleitung (20) für nicht regeneriertes Rauchgas zuführen, die funktional mit dem zumindest einen Wärmetauscher (16a, 16b, 16c, 16d) verbunden ist.

7. Regeneratives Verbrennungsverfahren nach einem der Ansprüche 5 oder 6, **dadurch gekennzeichnet, dass** es einen verbleibenden Anteil von regenerierten Rauchgasen, die die Brennstoffregenerationseinheit (13) verlassen, zur Mischung mit Austragsrauchgasen zuführt, die stromabwärts des zumindest einen Wärmetauschers (16a, 16b, 16c, 16d) gekühlt werden.

8. Regeneratives Verbrennungsverfahren nach einem der Ansprüche 5 bis 7, **dadurch gekennzeichnet, dass** es den Ofen oder den Brennraum (11) in aufeinanderfolgende Steuerbereiche (11a, 11b, 11c, 11d) unterteilt und Luftregenerationseinheiten (12) und Brennstoffregenerationseinheiten (13) entsprechend den Steuerbereichen (11a, 11b, 11c, 11d) zum Bewirken des Vorheizens aufweist.

## Revendications

1. Installation de combustion à régénération adaptée pour brûler des combustibles à faible pouvoir calorifique dans un four ou une chambre de combustion (11) pour des traitements thermiques à haute température à environ 1200-1300°C, ladite installation comprenant au moins une unité de régénération d'air (12) et au moins une unité de régénération de combustible à faible pouvoir calorifique (13) pour préchauffer de l'air et du combustible à faible pouvoir calorifique avant d'entrer dans une zone de contrôle du four (11), chacune desdites unités de régénération (12, 13) étant positionnée sur un conduit de fumées d'échappement respectif (12e, 13e) à la sortie du four (11) et sur un conduit d'alimentation en air (18a) et un conduit d'alimentation en combustible à faible pouvoir calorifique (19a) à l'entrée du four, chaque unité de régénération (12, 13) étant placée de manière périodique et sélective dans deux états différents de régénération et de combustion consécutifs, des vannes (12a, 13a, 12b, 13b) étant prévues sur lesdits conduits, en aval desdites unités de régénération (12, 13) dans un agencement ouvert et/ou fermé en fonction de l'un des deux états de régénération et de combustion sélectionné et actif, **caractérisée par le fait qu'**une unité de post-combustion (14) est reliée à un conduit (13f), au niveau de la sortie de l'unité de régénération de combustible (13), lequel reçoit au moins une partie de fumées régénérées provenant d'une vanne de régénération de fumées (13a) au niveau de la sortie de ladite unité de régénération de combustible (13), ladite unité de post-combustion (14) étant en outre alimentée en une certaine quantité d'air provenant d'une vanne (14c) positionnée sur une ligne d'alimentation en air (18) et en une certaine quantité de combustible alimenté par d'une vanne (13c) d'une ligne d'alimentation de combustible à faible pouvoir calorifique pour achever l'oxydation des fumées régénérées provenant de la vanne de régénération de fumées (13a) à l'intérieur de l'unité de post-combustion (14), ladite unité de post-combustion (14) étant reliée au niveau de la sortie à au moins un échangeur de chaleur (16a, 16b, 16c, 16d), ladite zone de contrôle comprenant des zones de contrôle consécutives (11a, 11b, 11c, 11d, etc.), chacune desdites zones de contrôle comprenant au moins une unité de régénération d'air (12) et au moins une unité de régénération de combustible à faible pouvoir calorifique (13), chacune desdites unités de régénération de combustible étant reliée à ladite unité de post-combustion (14) .

2. Installation de combustion à régénération selon la revendication 1, **caractérisée par le fait qu'**une ligne d'évacuation de fumées non-régénérées (20) est prévue au niveau de la sortie du four (11), reliée de manière fonctionnelle audit au moins un échangeur de chaleur (16a, 16b, 16c, 16d).

3. Installation de combustion à régénération selon la revendication 1 ou 2, **caractérisée par le fait qu'**une vanne de fumées (14a) est positionnée en aval de ladite unité de régénération de combustible (13), laquelle alimente lesdites fumées régénérées vers ladite unité de post-combustion (14).

4. Installation de combustion à régénération selon la revendication 3, **caractérisée par le fait qu'**une vanne supplémentaire (14b) est positionnée en aval de ladite unité de régénération de combustible (13), laquelle alimente une partie restante desdites fumées régénérées à travers un tuyau (14k) pour être mélangée avec des fumées d'échappement refroidies en aval dudit au moins un échangeur de chaleur (16a, 16b, 16c, 16d).

5. Procédé de combustion à régénération avec des combustibles à faible pouvoir calorifique, destiné à être mis en œuvre dans une installation associée à un four ou une chambre de combustion (11) pour des traitements thermiques à haute température à environ 1200-1300°C, l'installation comprenant au moins une unité de régénération d'air (12) et au moins une unité de régénération de combustible à faible pouvoir calorifique (13) pour préchauffer de l'air et du combustible à faible pouvoir calorifique avant d'entrer dans une zone de contrôle du four (11), chacune desdites unités de régénération (12, 13) étant positionnée sur un conduit de fumées d'échappement respectif (12e, 13e) à la sortie du four (11) et sur un conduit d'alimentation en air (18a) et un conduit d'alimentation en combustible à faible pouvoir calorifique (19a) à l'entrée du four, les phases suivantes étant mises en œuvre dans ledit procédé :
- une première phase de régénération, dans laquelle un écoulement de fumées d'échappement quittant le four (11) est amenée à passer à travers ladite au moins une unité de régénération d'air (12) et également dans ladite au moins une unité de régénération de combustible à faible pouvoir calorifique (13) par l'intermédiaire de moyens de régénération (12m, 13m) des deux unités précitées (12, 13) qui absorbent de la chaleur, maintenant fermés les conduits d'alimentation en air (18a) et en combustible (19a) vers les deux unités précités (12 13) ;
- une deuxième phase, ultérieure, de combustion, dans laquelle ledit écoulement de fumées est mis en suspension dans ladite au moins une unité de régénération d'air (12) et dans ladite au moins une unité de régénération de combustible à faible pouvoir calorifique (13), et de l'air et du combustible sont alimentés vers ladite au moins une unité de régénération d'air (12) et ladite au moins une unité de régénération de combustible à faible pouvoir calorifique (13), respectivement, pour absorber de la chaleur à partir desdits moyens de régénération (12m, 13m) chauffés dans la première phase précédente, lesdites première et deuxième phases étant répétées de manière périodique et sélective pour amener les deux unités précitées (12, 13) dans des états de régénération et de combustion consécutifs différents ;
le procédé étant **caractérisé par**
- une troisième phase, dans laquelle une unité de post-combustion (14) est alimentée en au moins une partie de fumées régénérées provenant d'une vanne de régénération de fumées (13a) au niveau de la sortie de ladite unité de régénération de combustible (13), en une certaine quantité d'air provenant d'une vanne (14c) positionnée sur ladite ligne d'alimentation en air (18) et en une certaine quantité de combustible alimenté par une vanne (13c) de la ligne de combustion de combustible à faible pouvoir calorifique (19) pour achever l'oxydation des fumées régénérées provenant de la vanne de régénération de fumées (13a), alimentant des fumées oxydées quittant ladite unité de post-combustion (14) vers au moins un échangeur de chaleur (16c),
le procédé étant mis en œuvre dans une installation dans laquelle ladite ligne de contrôle comprend des zones de contrôle consécutives (11a, 11b, 11c, 11d, etc.), chacune desdites zones de contrôle comprenant au moins une unité de régénération d'air (12) et au moins une unité de régénération de combustible à faible pouvoir calorifique (13), chacune desdites unités de régénération de combustible étant reliée à ladite unité de post-combustion (14).

6. Procédé de combustion à régénération selon la revendication 5, **caractérisé par le fait qu'**il alimente des fumées non-régénérées quittant le four (11) vers une ligne d'évacuation de fumées non-régénérées (20) reliée de manière fonctionnelle audit au moins un échangeur de chaleur (16a, 16b, 16c, 16d).

7. Procédé de combustion à régénération selon la revendication 5 ou 6, **caractérisé par le fait qu'**il alimente une partie restante de fumées régénérées quittant ladite unité de régénération de combustible (13) pour être mélangée avec des fumées d'échappement refroidies en aval dudit au moins un échangeur de chaleur (16a, 16b, 16c, 16d).

8. Procédé de combustion à régénération selon une ou plusieurs des revendications 5 à 7, **caractérisé par le fait qu'**il subdivise ledit four ou ladite chambre de combustion (11) en zones de contrôle consécutives (11a, 11b, 11c, 11d) et a des unités de régénération d'air (12) et des unités de régénération de combustible (13) en correspondance avec lesdites zones de contrôle (11a, 11b, 11c, 11d) pour réaliser le préchauffage.
